(19) Europäisches Patentamt
European Patent Office
Office européen des brevets

(11) **EP 2 657 852 A1**

(12) **EUROPEAN PATENT APPLICATION**
published in accordance with Art. 153(4) EPC

(43) Date of publication:
**30.10.2013 Bulletin 2013/44**

(51) Int Cl.:
*G06F 17/27* (2006.01)    *G06F 17/30* (2006.01)

(21) Application number: **11850052.9**

(22) Date of filing: **26.12.2011**

(86) International application number:
**PCT/CN2011/084699**

(87) International publication number:
**WO 2012/083892 (28.06.2012 Gazette 2012/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010 CN 201010621142**

(71) Applicants:
• **Peking University Founder Group Co., Ltd
Haidian District
Beijing 100871 (CN)**
• **Peking University
Beijing 100871 (CN)**
• **Beijing Founder Electronics Co., Ltd.
Haidian District, Beijing 100085 (CN)**
• **Peking University Founder R&D Center
Beijing 100871 (CN)**

(72) Inventors:
• **ZHENG, Yan
Haidian District
Beijing 100085 (CN)**
• **YU, Xiaoming
Haidian District
Beijing 100085 (CN)**
• **YANG, Jianwu
Haidian District
Beijing 100085 (CN)**

(74) Representative: **Michalski Hüttermann & Partner
Patentanwälte
Speditionstraße 21
40221 Düsseldorf (DE)**

(54) **METHOD AND DEVICE FOR FILTERING HARMFUL INFORMATION**

(57)     The application discloses a method and a device for filtering bad information on Internet relating to the computer information process technology and the information filtering technology. Embodiments of the application provide a method for filtering bad information on Internet, comprising: obtaining texts to be filtered, system advanced-research model and a user feedback model; pre-processing the obtained texts; obtaining a first matching result through performing feature information matching between the pre-processed information and the system advanced-research model information; obtaining a second matching result through performing feature information matching between the pre-processed information and the user feedback model information; and performing filtering process on the information of the obtained texts based on the first and second matching results. Through the technical solution disclosed in the application, the performance for automatically filtering bad information can be improved, and the system information can be updated automatically.

FIG.1

**Description**

Technical Field

The application relates to the computer information process technology and the information filtering technology, in particular to a method and a device for filtering bad information on Internet based on statistics and rules.

Background of the Application

With the rapid development of the Internet, the information is propagated more quickly. Bad information and normal information are mixed on Internet, such as advertisement, pornographic, violence and reactionary, which are hard to prohibit and are propagated in more subtle way. So, it is important to prevent the bad information from spreading so as to clean the Internet space. It needs large amount of human resources and material resources to filter out the bad information on Internet by manual methods, since there are immense amounts of data on Internet. Therefore, the automatic filtration of the bad information on Internet becomes a hotspot of research.

Nowadays, the automatic filtration of the bad information on Internet generally comprises the flowing two methods.

1. A filtering method based on the keyword matching

In this method, an exact matching is used to filter out the documents having keywords. This method is easy to operate and the bad information on Internet may be filtered out quickly.

2. A filtering method based on statistical texts categorization models

This method is based on a statistical texts filtering model, which is essentially a solution for texts categorization. The texts categorization is a hot area in natural language processing field in which there are a large number of classical models for reference. This method should be effective in theory but its function in practical application is undesirable, especially misidentification frequently occurs. The main reasons are as follow.

(1). Positive and negative corpuses are not balance. The positive corpus only comprises a small amount of classes, such as advertisement, pornographic, violence, reactionary and the bad information concerned by users. The negative corpus comprises a large amount of classes. For example these classes can be classed based on the document contents as economy, sports, politics, medicine, art, history, culture, environment, computer, education, military or the like.

(2) The expression of the bad information is subtle and changeable. The promulgator always designedly avoids the common words. Instead, the promulgator always uses homophone, deconstructing words, non-Chinese character noise, acronyms, new words or the like.

(3) The use's dictionary only provides the exact matching so that the determining method is inflexible. Moreover, the semantics orientation of single word is not representative, and thus the false rate is high. For example, in the case the words "free (免　费)" and "invoice (发票)" exist in the contexts simultaneously, the meanings are more persuasive than the meanings of single word "invoice".

(4) Some conventional methods for Chinese characters are not suitable for filtering out the bad information based on texts categorization models, for example by using a certain number of forbidden terms or by using the feature only including words having at least of two characters.

(5) There is not a uniform model for synthetically filtering out the bad information including advertisement, pornographic, violence and reactionary.

In the realization of the automatic filtration for the bad information on Internet, the inventor realizes that the conventional method for automatically for filtering out the bad information cannot meet the Internet's requirements and cannot be updated automatically.

Summary of the Application

The application provides a method and a device for filtering bad information on Internet. To this end, one embodiment provides the method for filtering bad information on Internet comprising:

    obtaining texts to be filtered, a system advanced-research model and a user feedback model;
    pre-processing the texts to be filtered;
    obtaining a first matching result through performing feature information matching between the pre-processed information and the system advanced-research model information;
obtaining a second matching result through performing feature information matching between the pre-processed information and the user feedback model information; and
performing filtering process on the obtained texts based on the first and second matching results.

Another embodiment provides the device for filtering bad information on Internet comprising:

an information obtaining module configured to obtain texts to be filtered, a system advanced-research model and a user feedback model;
a pre-processing module configured to pre-process the texts to be filtered;
a first matching module configured to perform feature information matching between the pre-processed information and the system advanced-research model information, so as to obtain a first matching result;
a second matching module configured to perform feature information matching between the pre-processed information and the user feedback model information, so as to obtain a second matching result; and
a filtering module configured to perform filtering process on the texts to be filtered based on the first and second matching results.

According to the method and the device disclosed in the application, the bad information on Internet will be filtered by a step of obtaining texts to be filtered, system advanced-research model information and a user feedback model information; a step of pre-processing the texts to be filtered; a step of obtaining a first matching result through performing feature information matching between the pre-processed information and the system advanced-research model information; a step of obtaining a second matching result through performing feature information matching between the pre-processed information and the user feedback model information; and a step of performing filtering process on the texts to be filtered based on the first and second matching results. Since the user feedback model is used to filter the bad information, and the user feedback information may be timely used in the automatic filtering for the bad information, it will realize the automatic update function for the matched information of the system.

Brief Description of the Drawing

Fig. 1 is a flowchart illustrating the method for filtering out the bad information on Internet according to one embodiment of the application.
Fig. 2 is a flowchart illustrating the method for filtering out the bad information on Internet according to another embodiment of the application.
Fig. 3 is a diagram illustrating the device for filtering out the bad information on Internet according to one embodiment of the application.
Fig. 4 is a diagram illustrating the device for filtering out the bad information on Internet according to another embodiment of the application.

Detailed Description

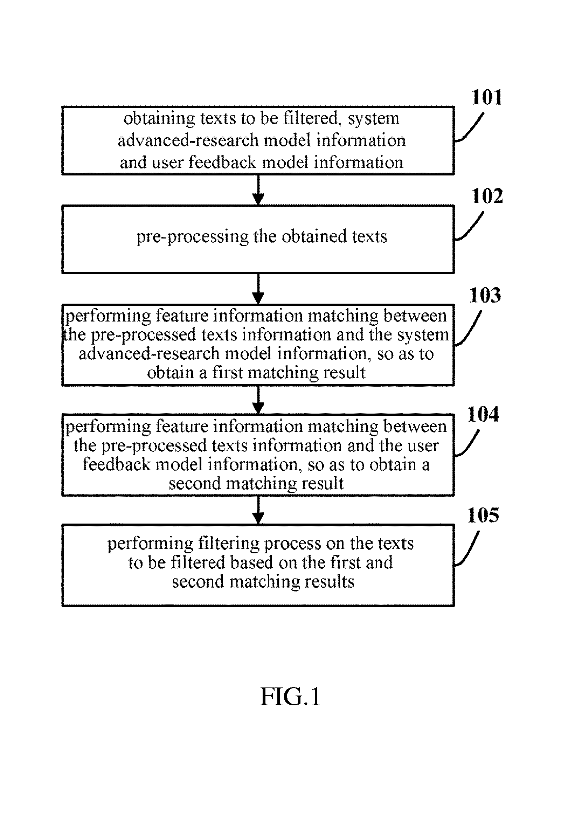

Hereinafter, the embodiments of the present invention will be described in detail with reference to the detailed description as well as the drawings.
As shown in fig. 1, the embodiment of the application provides a method for filtering out the bad information on Internet. The method comprises:

A step of S101, in which texts to be filtered, system advanced-research model information and user feedback model information are obtained;
A step of S102, in which the obtained texts are pre-processed;
A step of S103, in which a feature information matching is performed between the pre-processed texts information and the system advanced-research model information, so as to obtain a first matching result;
A step of S104, in which a feature information matching is performed between the pre-processed texts information and the user feedback model information, so as to obtain a second matching result; and
A step of S105, in which a filtering process is performed on the texts to be filtered based on the first and second matching results.

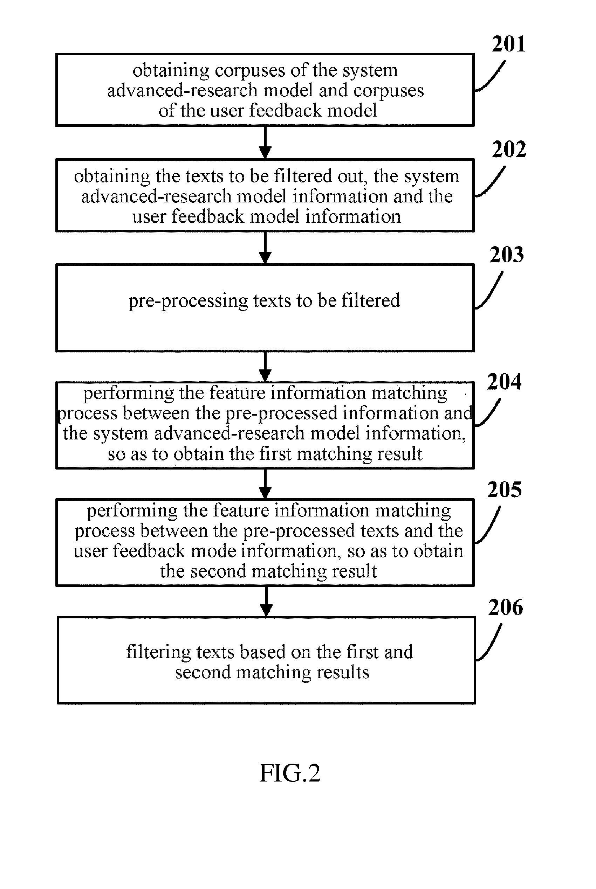

As shown in fig. 2, another embodiment of the application provides a method for filtering out the bad information on Internet. The method comprises the steps of S201-206.
In step of S201, corpuses of the system advanced-research model and corpuses of the user feedback model are obtained.

Specifically, the corpuses of the user feedback model may comprise a user feedback corpus and/or a corpus to be filtered. Generally, the training corpuses of the system advanced-research model and the user feedback model can be classified into the positive corpus and the negative corpus. For example, 10000 documents of texts including the bad information may be prepared for the positive corpus, which comprises content texts such as advertisement, pornographic, violence and reactionary or the like, and 30000 documents of texts including the normal information may be prepared for the negative corpus, which comprises main classes of content texts such as economy, sports, politics, medicine, art, history, culture, environment, computer, education, military or the like.

It should be noted that the positive and negative corpuses always are unbalance in the collection process of the training corpus. The range of one class of the corpus is very wide while the range of another class of the corpus is relatively narrow. The solution disclosed by the application allows the unbalanced distribution of corpuses, and the preparation strategies for the class of the corpus having wide range intends to cover the widest possible range rather than to collect the corpuses as much as possible.

In the step of S202, the texts to be filtered out, the system advanced-research model information and the user feedback model information are obtained.

In the step of S203, texts to be filtered are pre-processed, which comprises a step of segmenting the texts to be filtered. For example, a sentence may be segmented by punctuation and common words. The common words means the words which are frequently used and are meaningless for the determination, such as "的" "了". However, "您" always belongs to the positive corpus and "我" always belongs to the negative corpus, both of which are not suitable as common words.

It should be noted that the forbidden words list frequently used in natural language processing is not suitable as the common words list. Generally, the recitation "方正 智思分词4.0" can be used to perform the word segmenting and the part-of-speech tagging on the corpus. The obtained units from the segmenting (referred to as segmented units) are the smallest processing unit in the subsequent process.

The obtained candidate feature items from segmenting are counted. For example, the number of non-Chinese characters in the segmented units is counted. For example, the total number of segmented units is N1 and the total number of non-Chinese characters is N2, if the result of N2/N1 is greater than a threshold, it is determined that the texts corresponding to the candidate feature is bad information. The foundation for the determination is that the information includes a large number of noise characters which may be a spam text, such as advertisement or the like. Alternatively, the number (num(ad)) of contact information is counted, such as the URL, phone number, email, QQ number or the like, which often is used in the advertisement and is assigned with the default weight $score_{ad}$.

In the step of S204, the feature information matching process is performed between the pre-processed information and the system advanced-research model information, so as to obtain the first matching result. This step may comprise the steps S2041-S2045.

In the step of S2041, the pre-processed information and the system advanced-research model information are obtained. The system advanced-research model information includes a rule-based index database together with feature item information of the system advanced-research model. The rule-based index database may comprise the user rule-based index database and the user keyword index database, which may be generated by steps of S1-S2:

In the step of S1, the keywords are parsed. To be specific, the step S1 comprises a step of indexing Pinyin of the common Chinese characters so as to generate index for whole keywords according to each Pinyin index of each Chinese character in the keywords; a step of splitting structure of each Chinese character of the keywords so as to recur on and recombine the keywords based on the splitting result; and a step of forming the index of the keywords and split collection as key-value pairs so as to store all parsed results to generate the user keyword index database. For example, a keyword "法轮功" is parsed to generate an index value and will have various splitting results, such as "三去车仑工力", "法 车仑功" or the like.

In the step of S2, syntax is parsed, which may comprise a step of parsing the rule-based syntax to make them capable of being processed by the computer, wherein the rule-based syntax comprises AND, OR, NEAR, NOT. This step further comprises a step of forming key-value pairs by the keyword and rule syntax so as to store all parsed results to generate the user rule-based index database. For example, "A AND B" in which both of A and B are keywords to be parsed and syntax AND means that match to this rule is successful when the A and the B occur simultaneously in the contexts.

It should be noted that the above rule of the index database may be a rule configured by the user or a system preset rule; the above steps is a process for generating the corresponding index database through parsing the rule configured by the user, wherein the index database may be optimized to match the process as discussed later.

In the step of S2042, the matching process is performed between the pre-processed information and the system advanced-research model information, so as to obtain the feature item. The system advanced-research model information comprises the rule-based index database and feature items of the system advanced-research model. The step of obtaining the system advanced-research model information comprises the following steps S1-S4.

In the step of S1, a word string combined by the segmented units is served as a candidate feature item.

Example (1)

the successively segmented units are combined as the word string. For the segmented units in each sentence, the combination is started from the first segmented unit, wherein the maximum combine window is N. For example, given the ordered segmented units "ABCD" and the maximum combine window thereof is 3, there are 9 combinations for forming word string, i.e., ABC, BCD, AB, BC, CD, A, B, C and D.

Example (2)

The non-successively segmented units are combined as the word string. Pinyin index is calculated for the generated word string in the above example (1) and is matched with the user keyword index database generated in the step S1 in the step S2041. If at least one collection successfully matches with the generated pinyin index, the number (num(user)) of successful matching will be counted. Then the generated Pinyin index is matched with the user rule-based index database generated in the step S2 in the step S2041. If at least one collection successfully matches with the generated Pinyin index, a word string will be generated for the non-successively segmented units. Taking 9 word strings generated in the above example (1) as an example, in the user keyword index database, two word strings A and D are successfully matched; and in the user rule-based index database, a rule "A NEAR2 D", a new feature item AD will be generated, wherein "2" means that the distance between A and D is not greater than 2. The number (num(user)) of successful matching is accumulated and is assigned with the default weight score$_{user}$.

In the step of S2, the candidate feature item is filtered by frequency. Specifically, the occurrence number of the candidate feature items in the training corpus is counted and then the candidate feature items are filtered out in accordance with the frequency of the existence, so that the candidate feature item with the existence frequency greater than or equal to the threshold will be retained and the candidate feature item with the frequency less than the threshold will be removed.

In the step of S3, the candidate feature items are re-filtered in accordance with the frequency of the existence. This step comprises the following steps.

Firstly, the unreasonable frequency is reevaluated. For example, once B occurs, A occurs simultaneously (such as in form of AB), the occurrence frequency of B will be zero. The formula for reevaluate the frequency is:

$$\begin{cases} \log_2|a| * f(a) \\ \log_2|a| * ( f(a) - \dfrac{\sum_{b \in T_a} f(b)}{P(T_a)} ) \end{cases} \quad \text{where is not included;}$$

others.

Where, a is the feature item; f(a) is a word frequency of a; b is long string feature item including a; $T_a$ is a collection for b; and $P(T_a)$ is size of the collection.

Then the candidate feature items are re-filtered in accordance with the reevaluated frequency of occurrence. The candidate feature item with the frequency greater than or equal to the threshold will be retained and the candidate feature items with the frequency less than the threshold will be removed. The threshold may be adjusted to control the range of the candidate feature to be retained.

In the step of S4, the candidate feature items are selected automatically to extract the feature items. Specifically, in step of S4, the candidate feature items respectively obtained from the positive and negative corpuses in the above step S3 are combined, so that the combined candidate feature items have two word frequencies, which are corresponding to the positive frequency and the negative frequency, respectively. The chi-squared statistic in the statistics may be used to automatically select the feature item, so that the first N candidate feature items having the maximum chi-square value are served as final feature items information. The formula for the chi-squared statistic is:

$$\chi^2(\omega_i, C_k) = \frac{N(AD - BC)^2}{(A+C)(A+B)(B+D)(C+D)}$$

where meanings of A, B, C and D are as follows:

| | Texts belonging to the $C_k$ | Texts not belonging to the $C_k$ | sum |
|---|---|---|---|
| Feature item with w | A | B | A+B |
| Feature item without w | C | D | C+D |

(continued)

|  | Texts belonging to the $C_k$ | Texts not belonging to the $C_k$ | sum |
|---|---|---|---|
| sum | A+C | B+D | N |
| In this table, k is 0 or 1, which means two types, i.e., the positive type and the negative type. | | | |

It should be noted that the feature item may include a word having single Chinese character and a word having multiple Chinese characters. The word having single Chinese character has a significant impact on the negative texts. Especially the segmented units based on single Chinese character is common in content of texts information in forums, if single Chinese character is not considered, misjudgment will easily occur for the negative texts.

In the step of S2043, the corpus information score of the feature item is counted. Specifically, the frequency of feature item has been stored in step S4. Moreover, each feature item has two frequencies corresponding to the positive frequency and the negative frequency, respectively. For example, the positive frequency of the word "is greater than the negative frequency thereof, since the word "exists in bad information, such as advisement more frequently. The positive frequency and the negative frequency of each feature item are served as the positive weight and the negative weight thereof, respectively. In order to make the obtained weight values meaningful, the positive frequencies and the negative frequencies of all of feature items are normalized by rule of:

$$score(\omega_i) = \frac{freq(\omega_i)}{\sum freq(\omega_i)}$$

Since the generated feature item and the weight thereof are obtained via training according to two types of standard corpus pre-prepared by the system, the generated result is stored as feature item information of the system advanced-research model.

The feature information matching process is performed between the pre-processed information and feature item information of the system advanced-research model, so as to obtain the feature item information of the texts to be filtered and then calculate a positive score of the feature item information of the texts by rule of:

$$score_{pos}(doc) = \sum \log(score(\omega_i)_{pos})$$

A negative score of the feature item information of the texts to be filtered is calculated by rule of:

$$score_{neg}(doc) = \sum \log(score(\omega_i)_{neg})$$

Meanwhile, in consider of num(ad) and num(user), the right item of the above formula can be changed as:

$$\sum \log(score(\omega_i)_{neg})) + num(ad) * score_{ad} + num(user) * score_{user}$$

In the step of S2044, it is determined whether or not the texts corresponding to the feature item is bad information according to the corpus information score. If $score_{pos}(doc) > score_{neg}(doc)$, the system advanced-research model determines that the texts has bad information; if $score_{pos}(doc) = score_{neg}(doc)$, the system advanced-research model fails and thus the determination fails; If $score_{pos}(doc) < score_{neg}(doc)$, the system advanced-research model determines that the texts is a normal texts.

In the step of S2045, the first matching result is provided according to the determination.

In the step of S205, the feature information matching process is performed between the pre-processed texts and the user feedback mode information, so as to obtain the second matching result. The flowchart of this step is similar to that of the step 204.

It should be noted that the main difference between the process for obtaining the user feedback model information and the process for obtaining the system advanced-research model information lies in the selection of the training corpus in the step S201. The resources of training corpus for the user feedback model information may further comprise the following two aspects.

(1) User feedback mechanism

When the user finds a problem occurred in the practice. For example, the bad information is determined as normal information, the user reports the error to the system and the system takes the standard answer received from the user as the feedback corpus.

(2) Determination model mechanism

The determination model mechanism provides a determination process for bad information on the texts to be filtered in the step 206 and provides the determination result for the texts, i.e., the texts is a bad texts or a normal texts. It is determined whether or not the texts to be filtered will be used for the feedback training according to the reliability of the determination.

In the step of S206, texts are filtered based on the first and second matching results. Specifically, it is determined whether or not the first and second matching results are consistent, i.e., to determine whether or not the determination results of the system advanced-research model information and the user feedback model information are consistent. If yes, both of the matching results show that the texts is the texts having bad information or is the normal texts, the determination is more reliable. If no, the reliability of the determination is lowered, the texts will be filtered if a serious filtering policy is taken, but the texts cannot be used in the feedback training. If one of the models fails, the result is based on the other model and it is consider that the result is certain reliable and the texts can be used in the feedback training. If both of models fail, it will return a failure sign and the texts cannot be used in the feedback training.

It should be noted that, after each determination for the texts is finished, the method may further comprise a step of obtaining the number of corpuses for the user feedback model information and the corresponding threshold. Specifically, the number of corpuses for corpuses which can be used in the feedback training is counted and it is determined whether or not the corpus number is over the corresponding threshold. The user feedback model is updated according to the corpus number and the corresponding threshold. If the corpus number is greater than the threshold, the feedback corpus will be re-trained and the user feedback model information will be updated, wherein the threshold may be adjusted to adjust the update period.

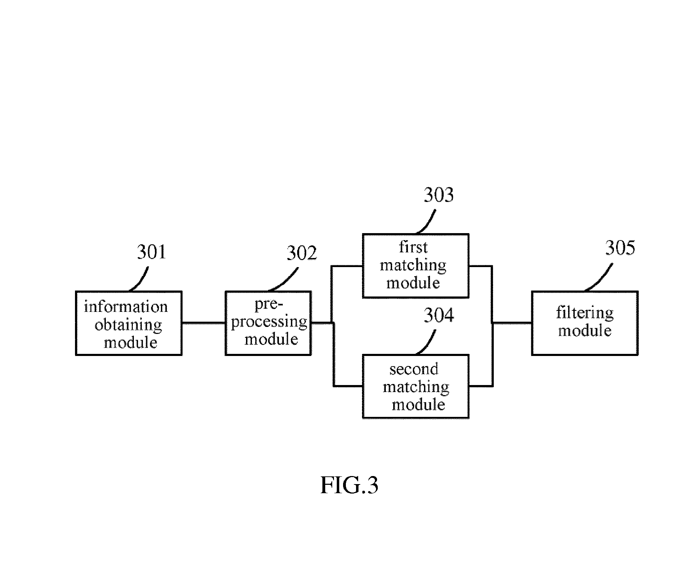

Fig. 3 is a diagram illustrating the device for filtering the bad information on Internet according to one embodiment of the application. The device comprises:

an information obtaining module 301 configured to obtain texts to be filtered, a system advanced-research model and a user feedback model;
a pre-processing module 302 configured to pre-process texts to be filtered;
a first matching module 303 configured to perform feature information matching between the pre-processed information and the system advanced-research model information, so as to obtain a first matching result;
a second matching module 304 configured to perform feature information matching between the pre-processed information and the user feedback model information, so as to obtain a second matching result; and
a filtering module 305 configured to perform filtering process on the texts to be filtered based on the first and second matching results.

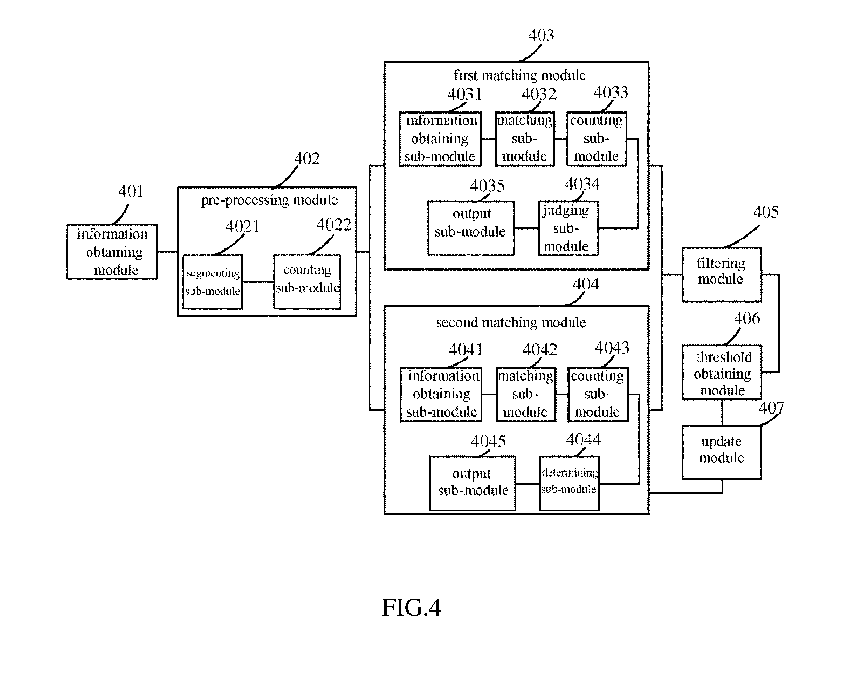

Fig. 4 is a diagram illustrating the device for filtering the bad information on Internet according to another embodiment of the application. The device comprises:

an information obtaining module 401 configured to obtain texts to be filtered, a system advanced-research model and a user feedback model and further obtain a training corpus of the user feedback model, wherein the training corpus comprises a user feedback corpus and/or a corpus to be filtered;
a pre-processing module 402 configured to pre-process the obtained texts, which comprises:

a segmenting sub-module 4021 configured to segment the texts to be filtered;
a counting sub-module 4022 configured to count the number of candidate feature items of the segmented information;

a first matching module 403 configured to perform feature information matching between the pre-processed information and the system advanced-research model information, so as to obtain a first matching result, wherein the first matching module 403 comprises:

an information obtaining sub-module 4031 configured to obtain the pre-processed information and the system advanced-research model information comprising a rule-based index database and feature item information of the system advanced-research model;

a matching sub-module 4032 configured to match the pre-processed information with the system advanced-research model information, so as to obtain a feature item;

a counting sub-module 4033 configured to count corpus information score of the feature item;

a judging sub-module 4034 configured to judge whether or not the texts corresponding to the feature items are bad information;

an output sub-module 4035 configured to provide the first result based on the determination;

a second matching module 404 configured to perform feature information matching between the pre-processed information and the user feedback model information, so as to obtain a second matching result, wherein the second matching module 404 comprises:

an information obtaining sub-module 4041 configured to obtain the pre-processed information and the user feedback model information comprises a rule-based index database and feature items for the user feedback model information;

a matching sub-module 4042 configured to match the pre-processed information with the user feedback model information, so as to obtain feature items;

a counting sub-module 4043 configured to count corpus information score of the feature items;

a determining sub-module 4044 configured to determine whether or not the obtained texts corresponding to the feature item is bad information; and

an output sub-module 4045 configured to provide the second result based on the determination;

a filtering module 405 configured to perform filtering process on the obtained texts based on the first and second matching results.

a threshold obtaining module 406 configured to obtain the number of corpuses for the user feedback model information and a corresponding threshold; and

an update module 407 configured to update the user feedback model according to the corpus number and the corresponding threshold, wherein if the corpus number is greater than or equal to the threshold, the update module will update the feedback corpus according to the corpus number and the corresponding threshold.

According to the method and device as discussed in embodiments of the application, texts to be filtered, system advanced-research model information and user feedback model information is obtained and the obtained texts is pre-processed. A processing of feature matching between the pre-processed texts and the system advanced-research model information is performed so as to obtain a first matching result. A processing of feature matching between the pre-processed information and the user feedback model information is performed, so as to obtain a second matching result; and then the texts is filtered based on the first and second matching results. Since the system of the application adopts two times matching for filtering, the automatic filtering for the bad information is accurate, so that the system performance can be improved. Since the user feedback model is used to filter the bad information and the user feedback information may be timely used in the automatic filtering for the bad information, it will realize the automatic update function for the matched information of the system.

Through the above description, a person having ordinary skill in the art should appreciate that a part or all of steps in the above embodiments may be implemented by program instructions together with the corresponding hardware. The program may be stored in a storage medium such as ROM/RAM, disk.

Embodiments and implementations of the present application have been illustrated and described, and it should be understood that various other changes may be made therein without departing the scope of the application.

## Claims

1.  A method for filtering bad information on Internet, comprising:

obtaining texts to be filtered, system advanced-research model information and user feedback model information;
pre-processing the obtained texts;
performing feature information matching between the pre-processed texts and the system advanced-research model information to obtain a first matching result;
performing feature information matching between the pre-processed texts and the user feedback model information to obtain a second matching result; and
performing filtering process on the obtained texts based on the first and second matching results.

2. The method according to claim 1, further comprising:

obtaining corpuses for the system advanced-research model and the user feedback model.

3. The method according to claim 2, wherein the corpuses for the user feedback model comprises a user feedback corpus and/or a corpus to be filtered.

4. The method according to claim 3, further comprising:

obtaining the number of corpuses for the user feedback model and a corresponding threshold; and
updating the user feedback model according the obtained number and the corresponding threshold.

5. The method according to any one of claims 2-4, wherein the step of pre-processing comprises:

segmenting the texts to be filtered; and
counting the number of candidate feature items obtained from the segmenting.

6. The method according to claim 5, wherein the step of obtaining the first matching result comprises:

obtaining the pre-processed texts and the system advanced-research model information;
obtaining a feature item through matching the pre-processed texts with the system advanced-research model information;
counting a corpus information score of the feature item;
judging whether or not the texts corresponding to the feature item is bad information according to the corpus information score; and
obtaining the first matching result according to the judging.

7. The method according to claim 5, wherein the step of obtaining the second matching result comprises:

obtaining the pre-processed texts and the user feedback model information;
obtaining feature items through matching the pre-processed texts with the user feedback model information;
counting a corpus information score of the feature items;
judging whether or not texts corresponding to the feature items is bad information according to the corpus information score; and
obtaining the second matching result according to the judging.

8. The method according to claim 6 or 7, wherein the system advanced-research model information comprises a rule-based index database and feature items of the system advanced-research model;
the user feedback model information comprises a rule-based index database and feature items of the user feedback model information.

9. The method according to claim 8, wherein the rule-based index database of the system advanced-research model comprises a system preset rule; and the rule-based index database of the user feedback model comprises an user configuration rule.

10. A device for filtering bad information on Internet, comprising:

an information obtaining module configured to obtain texts to be filtered, system advanced-research model information and a user feedback model information;
a pre-processing module configured to pre-process the obtained texts;
a first matching module configured to perform feature information matching between the pre-processed texts and the system advanced-research model information, so as to obtain a first matching result;
a second matching module configured to perform feature information matching between the pre-processed texts and the user feedback model information, so as to obtain a second matching result; and
a filtering module configured to perform filtering process on the obtained texts based on the first and second matching results.

**11.** The device according to the claim 10, wherein the information obtaining module is further configured to obtain corpuses for the user feedback model information.

**12.** The device according to the claim 11, wherein the corpuses of the user feedback model information comprise a user feedback corpus and/or a corpus to be filtered.

**13.** The device according to the claim 12, further comprising:

a threshold obtaining module configured to obtain the number of corpuses for the user feedback model information and a corresponding threshold; and
an update module configured to update the user feedback model according to the corpus number and the corresponding threshold.

**14.** The device according to any one of the claims 11-13, wherein the pre-processing module comprises:

a segmenting sub-module configured to segment the texts to be filtered; and
a counting sub-module configured to count the number of candidate feature items obtained from the segmenting.

**15.** The device according to the claim 14, wherein the first matching module comprises:

an information obtaining sub-module configured to obtain the pre-processed texts and the system advanced-research model information;
a matching sub-module configured to match the pre-processed texts with the system advanced-research model information, so as to obtain feature items;
a counting sub-module configured to count corpus information score of the feature items;
a judging sub-module configured to judge whether or not the texts corresponding to the feature items is bad information; and
an output sub-module configured to provide the first result based on the judgment.

**16.** The device according to the claim 14, wherein the second matching module comprises:

an information obtaining sub-module configured to obtain the pre-processed information and the user feedback model information;
a matching sub-module configured to match the pre-processed information with the user feedback model information, so as to obtain feature items;
a counting sub-module configured to count corpus information score of the feature items;
a judging sub-module configured to judge whether or not the obtained texts corresponding to the feature items is bad information; and
an output sub-module configured to provide the second result based on the judgment.

obtaining texts to be filtered, system
advanced-research model information
and user feedback model information

101

pre-processing the obtained texts

102

performing feature information matching between
the pre-processed texts information and the system
advanced-research model information, so as to
obtain a first matching result

103

performing feature information matching between
the pre-processed texts information and the user
feedback model information, so as to obtain a
second matching result

104

performing filtering process on the texts
to be filtered based on the first and
second matching results

105

FIG.1

**201**

obtaining corpuses of the system
advanced-research model and corpuses
of the user feedback model

**202**

obtaining the texts to be filtered out, the system
advanced-research model information and the
user feedback model information

**203**

pre-processing texts to be filtered

**204**

performing the feature information matching
process between the pre-processed information and
the system advanced-research model information,
so as to obtain the first matching result

**205**

performing the feature information matching
process between the pre-processed texts and the
user feedback mode information, so as to obtain
the second matching result

**206**

filtering texts based on the first and
second matching results

FIG.2

FIG.3

EP 2 657 852 A1

FIG.4

| INTERNATIONAL SEARCH REPORT | International application No. |
|---|---|
| | PCT/CN2011/084699 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G06F 17/-, H04L 12/-, H04L 29/-, H04W 12/-, H04W 80/-

Documentation searched other than minimum documentation to the extent that such documents are included in the fields searched

Electronic data base consulted during the international search (name of data base and, where practicable, search terms used)

CNABS, VEN, CNTXT, CNKI: reactionary violent website shield stop firewall add up linguistic data positive negative recognition preset pre-research pre-store net+ advertisement bad erotic word match+ forbid+ filter+ rule delet+ predefin+ feedback

**C. DOCUMENTS CONSIDERED TO BE RELEVANT**

| Category* | Citation of document, with indication, where appropriate, of the relevant passages | Relevant to claim No. |
|---|---|---|
| A | US 5987457 A (ACCELERATION SOFTWAREINT CORP.), 16 November 1999 (16.11.1999), the whole document | 1-16 |
| A | CN 101477544 A (TENCENT TECHNOLOGY (SHENZHEN) CO., LTD.), 08 July 2009 (08.07.2009), the whole document | 1-16 |
| A | CN 101639824 A (BEIJING INSTITUTE OF TECHNOLOGY), 03 February 2010 (03.02.2010), the whole document | 1-16 |
| A | CN 101702167 A (SHANGHAI SECOND POLYTECHNIC UNIVERSITY), 05 May 2010 (05.05.2010), the whole document | 1-16 |
| A | CN 101877704 A (ZTE CORP.), 03 November 2010 (03.11.2010), the whole document | 1-16 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 March 2012 (05.03.2012)** | **22 March 2012 (22.03.2012)** |

| Name and mailing address of the ISA/CN: | Authorized officer |
|---|---|
| State Intellectual Property Office of the P. R. China | |
| No. 6, Xitucheng Road, Jimenqiao | **ZHAO, Xiaoning** |
| Haidian District, Beijing 100088, China | |
| Facsimile No.: (86-10) 62019451 | Telephone No.: (86-10) **62412071** |

Form PCT/ISA/210 (second sheet) (July 2009)

## INTERNATIONAL SEARCH REPORT
### Information on patent family members

International application No.

**PCT/CN2011/084699**

| Patent Documents referred in the Report | Publication Date | Patent Family | Publication Date |
|---|---|---|---|
| US 5987457 A | 16.11.1999 | None | |
| CN 101477544 A | 08.07.2009 | WO 2010078792 A1 | 15.07.2010 |
| CN 101639824 A | 03.02.2010 | None | |
| CN 101702167 A | 05.05.2010 | None | |
| CN 101877704 A | 03.11.2010 | None | |

Form PCT/ISA/210 (patent family annex) (July 2009)

# INTERNATIONAL SEARCH REPORT

| International application No. |
|---|
| **PCT/CN2011/084699** |

**CLASSIFICATION OF SUBJECT MATTER**

G06F 17/27 (2006.01) i

G06F 17/30 (2006.01) i

Form PCT/ISA/210 (extra sheet) (July 2009)